# EUROPEAN PATENT SPECIFICATION

(11) **EP 1 694 710 B1**
(45) Date of publication and mention of the grant of the patent: **06.04.2016**
(21) Application number: 03781035.5
(22) Date of filing: 29.12.2003
(51) Int. Cl.: C08B 11/06, C08B 11/02, C08B 11/08

(54) **METHOD FOR PREPARATION OF FINE POWDERED CELLULOSE ETHERS**
VERFAHREN ZUR HERSTELLUNG VON FEIN GEPULVERTEN CELLULOSEETHERN
PROCEDE DE PREPARATION DE POUDRES FINES D'ETHERS CELLULOSIQUES

(30) Priority: 16.12.2003 KR 2003092005
(43) Date of publication of application: 30.08.2006
(73) Proprietor: Samsung Fine Chemicals Co., Ltd., Ulsan 680-090 (KR)
(72) Inventor: KIM, Seok Soo, 305-762 Daejeon (KR); SO, Jung Ho, 305-761 Daejeon (KR); LEE, Sang Ku, Yaksa-dong Jung-gu Ulsan 681-765 (KR); LEE, Il Yong, 305-380 Daejeon (KR); CHO, Myung Seung, 305-728 Daejeon (KR); YUN, Kyoung In, 305-752 Daejeon (KR)
(74) Representative: WSL Patentanwälte Partnerschaft mbB
(86) International application number: PCT/KR2003/002874
(87) International publication number: WO 2005/058970

(56) References cited:
- EP-B1- 0 161 607
- WO-A1-01/48021
- JP-A- 7 324 101
- JP-A- 2000 169 501
- KR-A- 2002 031 763
- KR-B1- 152 176
- US-A- 3 852 421
- US-A- 4 091 205
- US-A- 4 415 124

## Description

### Field of the Invention

The present invention relates to a method for the preparation of fine powdered cellulose ethers. In particular, the present invention relates to a method of preparation of cellulose ethers in a cost-effective manner having high running efficiency of process, which specifically regulates a reaction condition of each step to induce a particle refinement and thus significantly reduces a running load on a grinding process, in the reaction of treating finely pulverized celluloses with a caustic soda and reacting with an etherifying agent.

### Backgound of the Invention

Cellulose ethers, such as alkylcellulose and hydroxyalkylcellulose, hydroxyalkyl alkylcellulose are industrially valuable compounds used as thickeners, binders or adhesives in such diverse applications of medicine, construction industry, paints and so on.

Numerous methods have been disclosed as methods for preparing the cellulose ethers as follows.

US Pat. No. 4,076,935 discloses a method of reducing the particle size of cellulose ethers which comprises grinding the manufacture cellulose ethers in a vibration mill in the presence of air and sufficient water to yield a product, wherein at least 50% of the particles in the product are in a particle size of 100 micron or less. However, the method has several problems of requiring the use of complicated and special equipment, i.e., a vibration mill, and increasing a bulk weight of a product due to the additional injection of water.

In addition, US Pat. No. 4,820,813 teaches a method of producing high viscose cellulose ether particles with a fine particle size by impacting with a high speed air-swept impact mill. The cellulose ether products, after grinding, becomes very fine granules with a size of from about 40 to 400 mesh, but there is also a problem with this method that it requires a specific mill and manufactured good.

Further, US Pat. No. 5,488,104 discloses a process for comminuting cellulose ethers which comprises extruding the synthesized cellulose ethers through a plurality of orifices, each orifice having a cross-sectional area of from about 7.5×10⁻⁹ m² to about 1×10⁻⁶ m², to form an elongated extrudate, cutting the elongated extrudate to a desired length, and then grinding it with an air-swept impact mill. However, since this method requires more time for the process increased due to the introduction of a process of extruding a product with a microporous filter, it is very difficult to completely wash the filter, and the overall process of repeating the cutting, drying and grinding steps is very complicated and also not favored from the industrial point of view.

Furthermore, US Pat. No. 4,415,124 teaches two different methods for the production of micropowder from cellulose ethers, wherein one method comprises subjecting the cellulose ethers to a consolidation in a cooled ball mill and passing the consolidated material through a jet mill; and the other comprises, compressing the cellulose ethers into a pellet and grinding the pellet with a jet mill or a impact disc mill. However, since these methods should use at least two different mills in the grinding step, it increases the cost for equipments and the time required for the process. They are also industrially inefficient because it is possible to bring the overall process to a halt due to clogging occurred in the previous step. In addition, these methods have serious drawbacks that it requires considerable expenses for its operation, maintenance and repair.

Therefore, the known methods for the preparation of cellulose ethers described above have several problems that, although they suggest the use of a special equipment in the drying and grinding steps, this would make the investment scale enlarged, and there is a limitation with regard to capacity for applying to mass production since they require a pre-treatment step of compression and extrusion prior to the pulverization. Besides, the disadvantages of the known methods are complication of process and difficulty in maintenance.

Meanwhile, the present inventors have filed a patent application relating to a method for the preparation of cellulose ethers, which carries out the washing and filtering steps at the same time and introduces a process performing the grinding and drying steps simultaneously (Korea Patent Laid-Open Publication No: 2003-42796). The above method has the advantage of simultaneously performing the grinding and drying steps, but it is also requires a certain equipment for reducing the particle size, e.g., a mill, which incurs additional expenses for its operation, maintenance and repair.

The present inventors have therefore endeavored to solve theses problems of the known methods and as a result have found a reaction condition for preparing a microparticle form of cellulose ethers through a reactive control study for a synthetic process of cellulose ethers and developed a method for the preparation of fine powdered cellulose ethers which regulates the product's configuration by controlling the amount of an organic reactant in a reaction system.

US 4,415,124 discloses a process for the production of micro powders, wherein cellulose ether or cellulose, having a fine-fiber or cottony or wooly structure, is brought into a consolidated or embrittled form, and wherein thereafter the consolidated or embrittled material is subjected to grinding.

US 4,650,863 discloses a process for preparing mixed cellulose ethers comprising the steps: (a) alkalysation of the cellulose, (b) etherification of the alkali cellulose in the presence of a base, using at least one etherifying agent which requires, for the reaction with cellulose, a catalytic and sub-stoichiometric quantity of the base, and (c) after increasing the quantity of base, further etherification of the cellulose ether so prepared, using at least one etherifying agent which requires, for the reaction with cellulose, an at least stoichiometric quantity of a base or a catalytic and substoichiometric quantity of a base, increased over the quantity used in (a), with at least one inert organic solvent being used as a dispersing auxiliary, wherein the organic solvent used is dimethylether.

US 4,091,205 discloses a process for the preparation of low-substituted cellulose ethers comprising the successive steps of etherification of alkali cellulose, neutralization of the crude cellulose ether, washing, drying and pulverization, wherein the neutralization step is carried out in two stages.

KR 100152176 discloses a reactor for continuously synthesizing substituted cellulose ester in a proper reaction condition.

JP 2000-169501, JP 2000-204195 and JP 1995-324101 disclose a process for the production of hydroxypropylcellulose having low degree of substitution, respectively.

### Summary of the Invention

Accordingly, an object of the present invention is to provide an industrially efficient and economical method for the preparation of fine powdered cellulose ethers.

### Detailed Description of the Invention

In accordance with the present invention, there is provided a method for preparing fine powdered cellulose ethers which is characterized by comprising the steps of
(i) subjecting the pulverized celluloses to alkalinization by treating with an alkalifying agent;
(ii) preparing a reaction mixture by adding 0.01 to 3.0 parts by weight of an etherifying agent based on 1 part by weight of cellulose to the alkalinized celluloses;
(iii) subjecting the reaction mixture to the primary reaction in the condition of gradually increasing temperature ranging from 40 to 60°C for 10 to 60 min;
(iv) subjection the primary reaction mixture to the secondary reaction in the condition of gradually increasing temperature ranging from 45 to 75°C for 60 to 180 min; and
(v) subjecting the secondary reaction mixture to the tertiary reaction in the condition of gradually increasing temperature ranging from 80 to 90°C for 60 to 180 min,
wherein before adding the etherifying agent in step b) at least one diluent gas selected from dimethylether and diethylether is injected to the reaction mixture obtained in step a) in an amount of less than 2.5 parts by weight per 1 part by weight of cellulose.

Hereinafter, the present invention is described in detail.

The present invention relates to the economical method for the preparation of cellulose ethers having high running efficiency of process, which comprises specifically regulating a reaction condition of each step to induce a particle refinement and significantly reduces a running load on a grinding process in the reaction of treating finely pulverized celluloses with a caustic soda and reacting with an etherifying agent.

In the inventive method for the preparation of cellulose ethers, for the reaction of cellulose with an etherifying agent, it must be preceded an alkalinization by treating with the alkalifying agent to mollify a hard crystal structure of cellulose. The alkalifying agent plays a role of stimulating a binding or a reaction of various chemical compounds to the cellulose by expanding the crystal structure of cellulose via a binding to the cellulose as well as functions as a catalyst in the reaction of cellulose and an etherifying agent.

The active alkalinized celluloses are subjected to stirring at room temperature for a predetermined time to finely mollify its crystal structure.

After the celluloses alkalinized at room temperature are kept at a constant state capable of binding to a reactant, the etherifying agent is added thereto, and then, binds to the celluloses. There are some differences in the treatment of caustic soda to obtain a Degree of Substitution (DS) of a desired reactant (generally, alkyleneoxide and alkylhalide). The amount of treated caustic soda in the present invention varies to obtain the Degree of Substitution (DS) of alkoxy percent ranging from 15 to 30% and hydroxyalkoxy percent ranging from 5 to 25%.

Further, the inventive method of the presentation for preparing fine powdered cellulose ethers may comprise adding a diluent gas as a selective step before the step (ii) treating with the etherifying agent. However, it is preferable not to use a diluent gas or use it with a trace amount to produce cellulose ether with improved quality.

The diluent gas to be used in the present invention may be synthesized by using an ether compound such as dimethylether and a low grade alcohol such as isopropanol. However, the etherifying agent and diluent gas must be used with a fixed amount to obtain the desired Degree of Substitution. The configuration of the synthesized cellulose particles may differ according to the amount of an etherifying agent and a diluent gas and a reaction temperature. Some cellulose ethers have a light fibrous shape and the others, a spherical shape, which affects the Degree of Substitution or transparency of a product. Further, for the commercialization of theses cellulose ethers, it is required to induce granulation by treating with cold water, followed by drying, grinding with a jet mill or a ball mill to obtain a desired particle size, and then filtering them through a sieve having a predetermined pore size.

In case of synthesizing the cellulose ethers in a fibrous shape having a low density using a conventional preparation method, the granulation is not proceeded smoothly, and thus the bulk density of product may be worsened, which leads to increase in the amount of recirculation in the grinding and distribution steps and curtail the productivity. In case of synthesizing them in a spherical shape, the cellulose ethers can be well granulated. However, when an interior of the particle is not completely substituted with the etherifying agent or hydrophobic components are accumulated in its interior, they are arranged toward the surface for the pulverization and finally form a fibrous shape, which results in the disadvantages in the process that while an bulk density of the product may be deteriorated, the amount of recirculation in the grinding step may increase.

Accordingly, the present inventors have endeavored to solve theses problems and developed a method for preparing the cellulose ether particles having a hard fibrous shape, which is possible by controlling the total amount of organic compounds and a reaction temperature in a reaction system. Namely, the amount of organic compound means the total amount of organic matters including the injected etherifying agent based on the amount of finely pulverized cellulose ethers, and the reaction temperature, a step of maintaining or cooling the reactor's temperature after all the organic compounds are injected into a reactor and the reactor's temperature is gradually increased for a predetermined time. The configuration of cellulose ether particles can be regulated according to the combination of the amount of organic compounds and a reaction temperature.

The method of the present invention is described in more detail as follows.

The hard crystal structure of cellulose must be mollified to react with the etherifying agent. For this, it is preferable to use akalimetal hydroxide (caustic soda) in a solid or an aqueous solution state. In particular, it is more preferable to

use sodium hydroxide, potassium hydroxide or lithium hydroxide. It is important to spray the caustic soda to the pulverized celluloses to be evenly distributed. After the caustic soda is completely sprayed, less than 2.5 parts by weight of the diluent gas is injected for 1 part by weight of cellulose and well mixed, wherein the diluent gas is selected from the group of dimethylether and diethylether. More preferably, the diluent gas is injected less than 2.0 parts by weight for 1 part by weight of cellulose. If it exceeds 2.5 parts by weight, it can be dangerous because it is possible that the reactor's pressure goes beyond the maximum point. After the injection of a diluent gas, alkyleneoxide and alkylhalide are injected as an etherifying agent. It is preferable to use ethyleneoxide, propyleneoxide and butyleneoxide having a carbon atom ranging from 2 to 4 as alkyleneoxide, and methylchloride, ethylchloride, propylchloride and butylchloride having a carbon atom ranging from 1 to 5 as alkylhalide. Further, it is preferable that the etherifying agent is injected in the range of from 0.01 to 3.0 for 1 part by weight of cellulose. If the etherifying agent is injected less than 0.01 part by weight, it is very difficult to control the reaction temperature and a rapid exothermic reaction may be occurred. If the etherifying agent is injected more than 3.0 parts by weight, it is difficult to operate the process due to an excessive increase in reactive pressure and thus a special high pressure reactor is needed. After all the etherifying agent is injected, the primary reaction is carried out in the condition of gradually increasing temperature ranging from 40 to 60°C (preferably, from 40 to 50°C) for 10 to 60 min. If the temperature is below 40°C, the reaction rate becomes slowed down, which leads to the increase in time required for the process. In contrast, if the temperature is higher than 60°C, it is difficult to control the reaction of alkyleneoxide, which generates a lot of by-products due to a local overheating phenomenon. In case the reaction time is less than 10 min, a rapid exothermic reaction occurs due to extremely rapid temperature increase, which makes difficult to control the reaction temperature. In case the reaction time is more than 60 min, the overall process requires a longer period of time.

Further, the secondary reaction is performed in the condition of gradually increasing temperature ranging from 45 to 75 °C (preferably, from 55 to 65 °C) for 60 to 180 min. If the temperature is below 45 °C, the progress of the reaction becomes too slow, and if the temperature is higher than 75 °C, the production of by-products increases. If the reaction is performed for less than 60 min, the amount of unreacted alkyleneoxide increases, and if it is performed for more than 180 min, the reactive products may be denatured.

Then, the tertiary reaction is carried out in the condition of gradually increasing temperature ranging from 80 to 100 °C (preferably, from 85 to 90 °C) for 60 to 180 min and maintaining the resulting temperature for 10 to 60 min. In case of the temperature is below 80 °C, it is difficult to completely react the celluloses with alkylhalide, and if it is higher than 100 °C, the synthesized products may undergo a change in its color and degradation. In case the reaction is performed for less than 60 min, the alkylhalide reaction is not sufficient, and if it is performed for more than 180 min, the synthesized products may be denatured. After the reaction is completed, the synthetic products are subjected to filtering with 95 °C hot water, injected into a mill, where 60 to 80 °C hot wind blows is provided, and immediately distributed without a load of grinding treatment, to obtain fine powdered cellulose ethers.

Since the cellulose ether particles are prepared in a fibrous shape according to the inventive method, they do not conglomerate into a flock for drying, which prevents the enlargement of particle size. Further, since the particles are very flexible, they can be easily separated by a simple air-flow into a pipe, which guarantees the maintenance of product's feature for synthesis. Accordingly, the physical properties of the fine powdered cellulose ethers of the present invention are significantly different from those of cellulose ethers prepared by the conventional methods.

Further, the bulk density of the cellulose ethers obtained after simple drying is ranging from 0.45 to 0.65 g/mL. From the result, it has been found that the inventive method can prepare the cellulose ethers having a high bulk density without the additional granulation process. In addition, the cellulose ether particles prepared by the inventive method in the state of drying without the grinding step have the particle size distribution with 99 to 100% by weight of less than 100 mesh. At this time, a water content of the cellulose ether particles is regulated to be less than 3.0%.

These results have confirmed that the cellulose ether particles prepared by the inventive method are already formed in a microparticle shape. The method for the preparation of cellulose ethers of the present invention is industrially efficient and economical since there is no need of vigorously controlling the running condition of a mill, it is possible to reduce the time required for the process due to no recirculation of oversized products in the distribution process, and thereby, the running load is significantly decreased.

The following Examples and Test Examples are given for the purpose of illustration purposes only and shall not be construed as limiting the scope of the invention.

### Example 1

6 kg of finely pulverized celluloses were fed into a high-pressure reactor whose capacity is 100L of volume. To react the celluloses with an etherifying agent, a caustic soda in 50% by weight of an aqueous solution was evenly dispersed in the reactor by spraying to mollify the hard crystal structure of cellulose. After 8 kg of the caustic soda was completely sprayed, 2 kg of dimethylether as a diluent gas was injected into the reactor and mixed well. At this time, 25 kg of ethyleneoxide and 8 kg of methylhalide were added thereto. After the mixture was reacted for 60 min until the temperature reached 40°C, it was subjected to a secondary reaction in the condition of gradually increasing temperature ranging from 40 to 75°C for 100 min and a tertiary reaction at temperature of 80°C for 3 hrs, and then, the reactor's temperature was maintained for 30 min.

After the reaction was completed, 100L of hot water was fed to the reactor and stirred for 10 min. The resulting mixture was subjected to filtering for 30 min and the resulting products were dried in fluidized dryer. The dried products thus obtained (water content: 2.50%) were distributed for 10 min by using a vibrating distributor with a sieve having a pore size of 100 mesh without grinding. After the distribution, 995 g of the product (water content: 248%) under 100 mesh was obtained. The results are shown in Table 1.

### Examples 2 to 7 and Comparative Example

The reaction was carried out according to the same method described in Example 1 except that reaction temperature, the kind of a diluent gas and the amount used thereof were changed. The results are shown in Table 1.

**Table 1**

| | Diluent gas | | Primary reaction | | Secondary reaction | | Tertiary reaction | | Particle distribution of cellulose ether (under 100 mesh, %) |
|---|---|---|---|---|---|---|---|---|---|
| | Kind | Amount (kg) | Temp (°C) | Time (min) | Temp (°C) | Time (min) | Temp (°C) | Time (min) | |
| Ex.1 | Dimethyl ether | 1.5 | 40 | 60 | 60 | 100 | 80 | 180 | 99.5 |
| Ex. 2 | Dimethyl ether | 1.0 | 40 | 60 | 60 | 100 | 80 | 180 | 99.5 |
| Ex. 3 | Dimethyl ether | 0.5 | 40 | 60 | 60 | 180 | 80 | 180 | 99.6 |
| Ex. 4 | Dimethyl ether | 0.1 | 40 | 30 | 70 | 120 | 90 | 60 | 99.5 |
| Ex. 5 | Dimethyl ether | 1.0 | 45 | 60 | 60 | 180 | 90 | 60 | 99.4 |
| Ex. 6 | Dimethyl ether | 1.5 | 45 | 60 | 60 | 180 | 90 | 60 | 99.5 |
| Ex.7* | Dimethyl ether | 0.0 | 40 | 60 | 60 | 120 | 90 | 60 | 99.6 |
| Com Ex. | Dimethyl ether | 3.0 | 60 | 60 | 80 | 60 | 90 | 180 | 45.5 |

| | | | | | | | | | |
|---|---|---|---|---|---|---|---|---|---|
| *not according to the invention | | | | | | | | | |

As mentioned above, the method for the preparation of fine powdered cellulose ethers of the present invention solves the problems of known methods that are economically unfavorable and complex. The method of the present invention can prepare the cellulose ether particles in the form of a hard fiber by regulating the amount of organic compounds in the synthetic process and efficiently controlling the reaction temperature, which makes the process much simplified. Further, the method of the present invention is capable of determining the form of cellulose ether particles by regulating the amount used of a diluent gas, and is economically favorable to the point of expenses for running, maintenance and repair of equipment by introducing an epoch-making preparing process having no need of an additional grinding step besides a simple drying step and reducing a running load on the equipment. Furthermore, the method of the present invention increases the productivity by reducing the time required for the process.

Since the fine powdered cellulose ether particles thus prepared have a larger surface area than the known cellulose ethers, they can be rapidly hydrated and easily converted into a solution. Therefore, the cellulose ethers prepared according to the inventive method are suitable for preparing or coating a capsule in a medical industry as well as can be effectively used as a filler in a paste or a molding mixture together with mortar, gravel, cement or plaster and an additive in a synthetic resin.

While the embodiments of the subject invention have been described and illustrated, it is obvious that various changes and modifications can be made therein without departing from the spirit of the present invention which should be limited only by the scope of the appended claims.

## Claims

1. A method for preparing powdered cellulose ethers comprising the steps of
a) subjecting pulverized celluloses to alkalinization by treating with an alkalifying agent;
b) preparing a reaction mixture by adding 0.01 to 3.0 parts by weight of an etherifying agent for 1 parts by weight of cellulose to the alkalinized cellulose;
c) subjecting the reaction mixture to the primary reaction in the condition of gradually increasing temperature ranging from 40 to 60 °C for 10 to 60 min;
d) subjecting the primary reaction mixture to the secondary reaction in the condition of gradually increasing temperature ranging from 45 to 75 °C for 60 to 180 min; and
e) subjecting the secondary reaction mixture to the tertiary reaction in the condition of gradually increasing temperature ranging from 80 to 90 °C for 60 to 180 min,
thereby producing fine powdered cellulose ethers,
wherein before adding the etherifying agent in step b) at least one diluent gas selected from dimethylether and diethylether Is injected to the reaction mixture obtained in step a) in an amount of less than 2.5 parts by weight for 1 part by weight of cellulose.

2. The method of claim 1, wherein the reaction temperatures of the primary, secondary and tertiary reactions are ranging from 40 to 50 °C, 55 to 65 °C. and 85 to 90 °C, respectively.

3. The method of claim 1 or claim 2, wherein the etherifying agent is alkyleneoxide or alkythalide.

4. The method of claim 3, wherein the alkyleneoxide has carbon atoms ranging from 2 to 4, and the alkyl halide has carbon atoms ranging from 1 to 5.

5. The method of one of claims 1 to 4, wherein the alkalizing agent is alkalimetal hydroxide (caustic soda) in a solid or an aqueous solution state.

6. The method of one of claims 1 to 5, wherein the resulting fine powdered cellulose ethers have a bulk density ranging from 0.45 to 0.65 g/mL.

7. The method of one of claims 1 to 6, wherein the resulting fine powdered cellulose ethers have a particle distribution rate of greater than 99% for the particles of less than 100 mesh in size.

## Patentansprüche

1. Verfahren zur Herstellung von pulverigen Zelluloseethern, mit den Stufen, bei denen man:
a) pulverige Zellulosen einer Alkalisierung durch Behandeln mit einem alkalisch machenden Reagenz aussetzt;
b) ein Reaktionsgemisch durch Hinzufügen von 0,01 bis 3,0 Gewichtsteilen eines Veretherungsmittels pro 1 Gewichtsteil Zellulose zu der alkalisierten Zellulose herstellt;
c) das Reaktionsgemisch der Primärreaktion unter der Bedingung aussetzt, dass man die Temperatur im Bereich von 40 bis 60 °C für 10 bis 60 min allmählich erhöht;
d) das Gemisch der Primärreaktion der Sekundärreaktion unter der Bedingung aussetzt, dass man die Temperatur im Bereich von 45 bis 75 °C für 60 bis 180 min allmählich erhöht; und
e) das Gemisch der Sekundärreaktion der Tertiärreaktion unter der Bedingung aussetzt, dass man die Temperatur im Bereich von 80 bis 90 °C für 60 bis 180 min allmählich erhöht,
und dadurch feinpulverige Zelluloseether herstellt,
wobei vor dem Hinzufügen des Veretherungsmittels in Stufe b) wenigstens ein Verdünnungsgas, das unter Dimethylether und Diethylether ausgewählt ist, in das in Stufe a) erhaltene Reaktionsgemisch in einer Menge von weniger als 2,5 Gewichtsteilen pro 1 Gewichtsteil an Zellulose injiziert wird.

2. Verfahren nach Anspruch 1, wobei die Reaktionstemperaturen der Primär-, Sekundärund Tertiärreaktionen jeweils in dem Bereich von 40 bis 50 °C, 55 bis 65 °C und 85 bis 90 °C liegen.

3. Verfahren nach Anspruch 1 oder 2, wobei das Veretherungsmittel Alkylenoxid oder Alkylhalogen ist.

4. Verfahren nach Anspruch 3, wobei das Alkylenoxid 2 bis 4 Kohlenstoffatome und das Alkylhalogen 1 bis 5 Kohlenstoffatome aufweist.

5. Verfahren nach einem der Ansprüche 1 bis 4, wobei das Alkalisierungsmittel Alkalimetallhydroxid (kaustisches Soda) in einem festen Zustand oder im Zustand einer wässrigen Lösung ist.

6. Verfahren nach einem der Ansprüche 1 bis 5, wobei die daraus hervorgehenden feinpulverigen Zelluloseether eine Schüttdichte im Bereich von 0,45 bis 0,65 g/ml aufweisen.

7. Verfahren nach einem der Ansprüche 1 bis 6, wobei die daraus hervorgehenden feinpulverigen Zelluloseether eine Partikelverteilungsrate von mehr als 99 % für die Partikel mit einer Größe von weniger als 100 Mesh aufweisen.

## Revendications

1. Procédé de préparation de poudres d'éthers cellulosiques comprenant les étapes consistant à
a) soumettre les celluloses en poudre à une alcalinisation par traitement avec un agent alcalifiant ;
b) préparer un mélange réactionnel en ajoutant de 0,01 à 3,0 parties en poids d'un agent éthérifiant pour 1 partie en poids de cellulose à la cellulose alcalinisée ;
c) soumettre le mélange réactionnel à la réaction primaire dans des conditions de température augmentant progressivement dans la plage de 40 à 60 °C pendant 10 à 60 min ;
d) soumettre le mélange réactionnel primaire à la réaction secondaire dans des conditions de température augmentant progressivement dans la plage de 45 à 75 °C pendant 60 à 180 min ; et
e) soumettre le mélange réactionnel secondaire à la réaction tertiaire dans des conditions de température augmentant progressivement dans la plage de 80 à 90 °C pendant 60 à 180 min,
pour ainsi produire des poudres fines d'éthers cellulosiques,
dans lequel avant l'addition de l'agent éthérifiant à l'étape b) au moins un gaz diluant choisi parmi le diméthyléther et le diéthyléther est injecté dans le mélange réactionnel obtenu à l'étape a) en une quantité inférieure à 2,5 parties en poids pour 1 partie en poids de cellulose.

2. Procédé selon la revendication 1, dans lequel les températures de réaction des réactions primaire, secondaire et tertiaire sont situées dans la plage de 40 à 50 °C, de 55 à 65 °C, et de 85 à 90 °C, respectivement.

3. Procédé selon la revendication 1 ou la revendication 2, dans lequel l'agent éthérifiant est un alkylèneoxyde ou un halogénure d'alkyle.

4. Procédé selon la revendication 3, dans lequel l'alkylèneoxyde comporte des atomes de carbone en un nombre de 2 à 4, et l'halogénure d'alkyle comporte des atomes de carbone en un nombre de 1 à 5.

5. Procédé selon l'une des revendications 1 à 4, dans lequel l'agent d'alcalinisation est un hydroxyde de métal alcalin (soude caustique) à l'état de solide ou de solution aqueuse.

6. Procédé selon l'une des revendications 1 à 5, dans lequel les poudres fines d'éthers cellulosiques résultantes ont une masse volumique apparente située dans la plage de 0,45 à 0,65 g/ml.

7. Procédé selon l'une des revendications 1 à 6, dans lequel les poudres fines d'éthers cellulosiques résultantes ont un taux de distribution des particules supérieur à 99 % pour les particules ayant une taille inférieure à 100 mesh.
